# FASCICULE DE BREVET EUROPEEN

(11) **EP 3 248 836 B1**
(45) Date de publication et mention de la délivrance du brevet: **24.10.2018**
(21) Numéro de dépôt: 17169036.5
(22) Date de dépôt: 02.05.2017
(51) Int. Cl.: B60P 1/44, B60P 3/00, B60P 3/07

(54) **VEHICULE DE TRANSPORT UTILITAIRE, BASE LOGISTIQUE MOBILE COMPRENANT UN TEL VEHICULE, ET CELLULE POUR UN TEL VEHICULE**
TRANSPORT- UND NUTZFAHRZEUG, MOBILE LOGISTIKBASIS, DIE EIN SOLCHES FAHRZEUG UMFASST, UND ZELLE FÜR EIN SOLCHES FAHRZEUG
UTILITY TRANSPORT VEHICLE, MOBILE LOGISTICS BASE COMPRISING SUCH A VEHICLE, AND CELL FOR SUCH A VEHICLE

(30) Priorité: 18.05.2016 FR 1654429
(43) Date de publication de la demande: 29.11.2017
(73) Titulaire: S.A. Libner, 79400 Saint-Maixent l'Ecole (FR)
(72) Inventeur: LIBNER, Joseph, 79400 SAIVRES (FR)
(74) Mandataire: Godineau, Valérie

(56) Documents cités:
- WO-A2-2015/044549
- DE-A1- 2 359 418
- DE-U1-202004 006 066
- US-A- 4 239 447

## Description

### DOMAINE DE L'INVENTION

L'invention concerne un véhicule de transport utilitaire, une base logistique mobile comprenant un tel véhicule utilitaire et un véhicule léger, et une cellule couplable à une enceinte de stockage de charges, en vue de la réalisation dudit véhicule de transport utilitaire.

Elle concerne plus particulièrement un véhicule de transport utilitaire comprenant, depuis l'avant en direction de l'arrière du véhicule, un poste de pilotage, une enceinte de stockage de charges munie d'un plancher sur lequel les charges sont aptes à être stockées et un emplacement apte à recevoir un véhicule léger, ledit véhicule léger comprenant un châssis roulant équipé d'un poste de conduite et d'un plateau de transport de charges, ce véhicule léger étant destiné à s'étendre à l'intérieur dudit emplacement avec son axe longitudinal disposé transversalement à l'axe longitudinal du véhicule de transport utilitaire.

### ART ANTÉRIEUR

L'accès des poids lourds dans les centres de villes, pour la livraison et la prise en charge de marchandises, est de plus en plus problématique. À ce jour, aucune solution ne donne satisfaction.

Il est connu, par exemple, d'embarquer un chariot élévateur sur un plateau roulant du camion dont l'arrière peut être équipé d'une plateforme élévatrice. Toutefois, de tels chariots élévateurs, généralement dépourvus de suspension, sont conçus pour rouler sur quelques centaines de mètres, dans des entrepôts, mais ne sont pas conçus pour une circulation sur route.

Pour résoudre ce problème, il a été développé un véhicule de transport utilitaire tel que décrit ci-dessus, comme l'illustre la demande internationale WO 2015/044 549.

Un véhicule de transport utilitaire ayant les caractéristiques du préambule de la revendication 1 est connu de la demande US 4 239 447 A.

La conception d'un tel véhicule de transport permet une livraison, appelée livraison du dernier kilomètre, aisée de la marchandise transportée dans les centres des villes, et une prise en charge aisée de marchandises en centre-ville, grâce à la présence du véhicule léger embarqué. Toutefois, il arrive que pendant les phases de livraison en ville à l'aide du véhicule léger, il soit nécessaire d'utiliser le véhicule de transport utilitaire pour le transport de charges. Avec les solutions actuelles, il est difficile de charger l'enceinte de stockage de charges.

### BUTS ET RÉSUMÉ

Un but de l'invention est de proposer un véhicule de transport utilitaire dont la conception permet une polyvalence de chargement et de transport des charges.

Un autre but de l'invention est de proposer un véhicule de transport utilitaire dont la conception permet un encombrement réduit, y compris pendant les phases de déchargement et de chargement du véhicule léger.

À cet effet, l'invention a pour objet un véhicule de transport utilitaire comprenant, depuis l'avant en direction de l'arrière du véhicule, un poste de pilotage, une enceinte de stockage de charges munie d'un plancher sur lequel les charges sont aptes à être stockées et un emplacement apte à recevoir un véhicule léger, ledit véhicule léger comprenant un plateau de transport de charges, ce véhicule léger étant destiné à s'étendre à l'intérieur dudit emplacement avec son axe longitudinal disposé transversalement à l'axe longitudinal du véhicule de transport utilitaire, caractérisé en ce que ledit emplacement, apte à recevoir un véhicule léger, se présente sous forme d'une cellule comprenant une face dite avant de communication de la cellule avec l'enceinte de stockage, une face dite arrière opposée à la face avant de la cellule, deux faces latérales, une face du dessus formant toit et une face du dessous formant plancher, en ce que la face arrière de la cellule est délimitée par deux montants reliés entre eux, en partie basse, par une traverse apte à former le pare-chocs et la barre anti-encastrement du véhicule de transport utilitaire, en ce que l'espace de la face arrière laissé libre, au-dessus de la traverse basse, entre les montants, est apte à être fermé au moins partiellement par un élément de fermeture, tel qu'un volet roulant, en ce que la face arrière de la cellule est, au niveau des faces latérales, reliée, en partie haute, à la face avant de la cellule, par une liaison de type pont, pour délimiter au niveau de chaque face latérale, en coopération avec le pont de liaison et la face avant, une ouverture dite latérale obturable apte à permettre le chargement/déchargement du véhicule léger, en ce que la face du dessous de la cellule est une plateforme mobile reliée aux faces avant et arrière de la cellule par des organes de liaison pour un déplacement en monte et baisse de ladite plateforme entre au moins trois positions, à savoir une position basse d'appui au sol dans laquelle le véhicule léger est apte à être chargé/déchargé de la plateforme à travers une ouverture latérale de la cellule, une position intermédiaire, dite de transport, dans laquelle la plateforme de la cellule s'étend à un niveau inférieur à celui du plancher de l'enceinte de stockage du véhicule de transport utilitaire pour permettre un positionnement sensiblement coplanaire du plancher de l'enceinte de stockage et du plateau de transport de charge du véhicule léger en vue d'un transfert de charge entre véhicule léger et plancher de l'enceinte de stockage du véhicule de transport utilitaire et une position haute, dite de chargement/déchargement à quai, dans laquelle la plateforme de la cellule et le plancher de l'enceinte de stockage du véhicule de transport utilitaire sont coplanaires en vue d'un transfert de charge entre plateforme et plancher, ladite plateforme de la cellule s'étendant, dans chacune de ces positions, à l'aplomb de la face du dessus formant toit de la cellule.

La possibilité, pour la plateforme du véhicule de transport utilitaire, d'occuper une pluralité de positions, et la réalisation d'une cellule à ouvertures latérales et arrière permet indifféremment un chargement par le côté ou par l'arrière dudit véhicule de transport utilitaire, notamment lorsque le véhicule de transport utilitaire est à quai.

Selon un mode de réalisation, la face avant est délimitée au moins par deux montants, les montants de délimitation des faces avant et arrière sont dits télescopiques et comprennent chacun une partie fixe et une partie mobile d'extension du montant dit télescopique et les organes de liaison entre la plateforme et les faces avant ou arrière sont formés au moins par la partie mobile télescopique desdits montants. Il en résulte une conception simplifiée de la plateforme élévatrice.

Selon un mode de réalisation, la cellule comprend des moyens d'entraînement en déplacement des parties mobiles des montants, ces moyens d'entraînement étant logés au moins partiellement à l'intérieur desdits montants. Ainsi, l'encombrement de l'ensemble est réduit.

Selon un mode de réalisation, les moyens d'entraînement en déplacement des parties mobiles des montants comprennent des câbles, des poulies pour un montage en moufle desdits câbles et au moins un vérin d'entraînement en déplacement desdits câbles.

Selon un mode de réalisation, au niveau de chaque face latérale, l'espace laissé libre sous le pont de liaison entre la face arrière et la face avant de la cellule est un espace au moins partiellement obturable apte à être fermé par un élément de fermeture, tel qu'un volet roulant.

Selon un mode de réalisation, la face avant de communication de la cellule avec l'enceinte de stockage est une face obturable à l'aide d'un élément de fermeture, tel qu'un volet roulant. Il est ainsi possible de disposer d'une enceinte de stockage thermiquement isolée, notamment pour le transport de produits frais, indépendamment de la présence de la cellule.

Selon un mode de réalisation, le véhicule de transport utilitaire comprend des moyens de verrouillage de la plateforme au moins en position intermédiaire de transport.

Selon un mode de réalisation, le véhicule de transport utilitaire comprend des moyens anti-démarrage, ou d'émission d'un signal d'alerte, en position basse d'appui au sol de la plateforme de la cellule.

Selon un mode de réalisation, la plateforme de la cellule comprend des éléments de plateforme formant plateau disposés côte à côte depuis une face latérale en direction de l'autre face latérale de la cellule, au moins deux des éléments de plateforme formant plateau étant montés chacun à pivotement autour d'un axe s'étendant sensiblement parallèlement à l'axe longitudinal du véhicule de transport utilitaire pour permettre le passage desdits éléments de plateforme d'une position dite horizontale, dans laquelle ils s'étendent de manière coplanaire, à une position inclinée dans laquelle ils sont inclinés à pente descendante depuis l'intérieur en direction de l'extérieur de la cellule pour former une rampe de circulation. Ainsi, il n'est pas nécessaire de déployer des éléments d'accès en saillie du véhicule de transport utilitaire pendant les phases de chargement/déchargement du véhicule léger.

Selon un mode de réalisation, la plateforme de la cellule comprenant des éléments de plateforme formant plateau disposés côte à côte depuis une face latérale en direction de l'autre face latérale de la cellule, au moins l'un des éléments de plateforme est monté mobile en monte et baisse, cet élément de plateforme étant apte à former, en position haute, une butée anti-abaissement du plateau de transport de charge du véhicule léger à l'état positionné dudit véhicule léger sur ladite plateforme de la cellule. Une telle butée anti-abaissement permet de neutraliser les suspensions du véhicule léger qui tendent à entraîner, soit un abaissement du plateau de transport de charge du véhicule léger au fur et à mesure de son chargement, soit une élévation du plateau de transport de charge du véhicule léger au fur et à mesure de son déchargement.

L'invention a encore pour objet une base logistique mobile comprenant un véhicule de transport utilitaire et un véhicule léger, ledit véhicule léger comprenant un plateau de transport de charges, caractérisée en ce que le véhicule de transport utilitaire de la base logistique mobile est conforme à celui décrit ci-dessus.

L'invention a encore pour objet une cellule, notamment pour le transport d'un véhicule léger comprenant un plateau de transport de charges, ladite cellule étant positionnable à l'arrière d'une enceinte de stockage de charges munie d'un plancher et disposée dans le prolongement d'un poste de conduite en vue de la réalisation d'un véhicule de transport utilitaire conforme à celui décrit ci-dessus, le véhicule léger étant destiné à s'étendre à l'intérieur de ladite cellule avec son axe longitudinal disposé transversalement à l'axe longitudinal du véhicule de transport utilitaire à l'état couplé de la cellule à ladite enceinte de stockage, caractérisée en ce que la cellule comprend une face dite avant couplable à l'enceinte de stockage et apte à permettre la communication de la cellule avec l'enceinte de stockage, une face dite arrière opposée à la face avant de la cellule, deux faces latérales, une face du dessus formant toit et une face du dessous formant plancher, en ce que la face arrière de la cellule est délimitée par deux montants reliés entre eux en partie basse par une traverse apte à former le pare-chocs et la barre anti-encastrement du véhicule de transport utilitaire à l'état couplé de la cellule à l'enceinte de stockage du véhicule de transport utilitaire, en ce que l'espace de la face arrière laissé libre au-dessus de la traverse basse entre les montants est apte à être fermé au moins partiellement par un élément de fermeture, tel qu'un volet roulant, en ce que la face arrière de la cellule est, au niveau des faces latérales, reliée, en partie haute, à la face avant de la cellule, par une liaison de type pont, pour délimiter au niveau de chaque face latérale, en coopération avec le pont de liaison et la face avant, une ouverture dite latérale obturable apte à permettre le chargement/déchargement du véhicule léger, en ce que la face du dessous de la cellule est une plateforme mobile reliée aux faces avant et arrière de la cellule par des organes de liaison pour permettre à l'état couplé de manière suspendue de la cellule à l'enceinte de stockage d'un véhicule de transport utilitaire un déplacement en monte et baisse de ladite plateforme entre au moins trois positions, à savoir une position basse d'appui au sol dans laquelle le véhicule léger est apte à être chargé/déchargé de la plateforme de la cellule à travers une ouverture latérale de la cellule, une position intermédiaire dite de transport dans laquelle la plateforme de la cellule est apte à s'étendre à un niveau inférieur à celui du plancher de l'enceinte de stockage du véhicule de transport utilitaire pour permettre un positionnement sensiblement coplanaire du plancher de l'enceinte de stockage et du plateau de transport de charge du véhicule léger en vue d'un transfert de charge entre véhicule léger et plancher de l'enceinte de stockage du véhicule de transport utilitaire et une position haute, dite de chargement/déchargement à quai, dans laquelle la plateforme de la cellule est apte à s'étendre de manière coplanaire avec le plancher de l'enceinte de stockage du véhicule de transport utilitaire en vue d'un transfert de charge entre plateforme et plancher, ladite plateforme de la cellule s'étendant dans chacune de ces positions à l'aplomb de la face formant toit de la cellule.

### BRÈVE DESCRIPTION DES DESSINS

L'invention sera bien comprise à la lecture de la description suivante d'exemples de réalisation, en référence aux dessins annexés dans lesquels :
- La figure 1 représente une vue schématique d'ensemble d'un véhicule de transport utilitaire conforme à l'invention, en position basse d'appui au sol de la plateforme de la cellule du véhicule de transport utilitaire.
- La figure 2 représente une vue schématique d'ensemble d'un véhicule de transport utilitaire conforme à l'invention, en position basse d'appui au sol de la plateforme de la cellule du véhicule de transport utilitaire, à l'état chargé d'un véhicule léger.

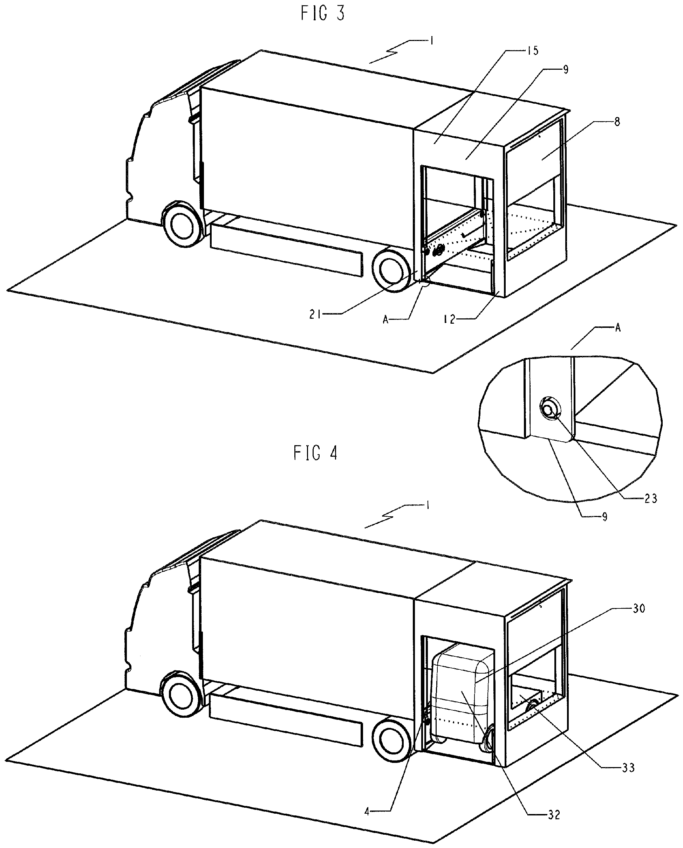

- La figure 3 représente une vue schématique d'ensemble d'un véhicule de transport utilitaire conforme à l'invention, en position de transport d'un véhicule léger, associée à une vue de détail des moyens de verrouillage de la plateforme dans ladite position intermédiaire de transport.
- La figure 4 représente une vue schématique d'ensemble d'un véhicule de transport utilitaire conforme à l'invention, en position intermédiaire de transport de la plateforme de la cellule, à l'état chargé d'un véhicule léger.
- La figure 5 représente une vue schématique d'ensemble d'un véhicule de transport utilitaire conforme à l'invention, en position haute de la plateforme de la cellule du véhicule de transport utilitaire, notamment pour un chargement/déchargement à quai.
- La figure 6 représente, en parallèle, deux vues de la cellule de chargement à quai, l'une en position fermée des ouvertures, l'autre en position ouverte des ouvertures des faces latérales, avant et arrière de la cellule.

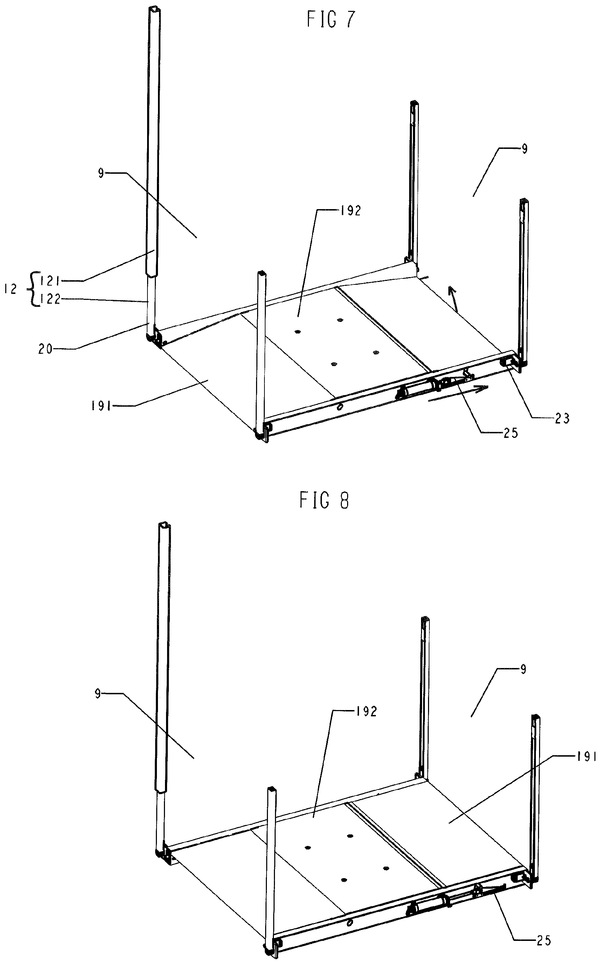

- La figure 7 représente une vue schématique partielle simplifiée de la plateforme et des montants, dans la position dans laquelle certains éléments de la plateforme forment une rampe d'accès.
- La figure 8 représente une vue schématique partielle simplifiée de la plateforme et des montants, dans la position dans laquelle les éléments de la plateforme sont en disposition coplanaire.
- La figure 9 représente une vue schématique simplifiée de la plateforme et de ses moyens d'entraînement en déplacement en monte et baisse.
- La figure 10 représente une vue schématique simplifiée de la plateforme et de ses moyens d'entraînement en déplacement en monte et baisse dans la position correspondant à la position haute de la plateforme.
- La figure 11 représente une vue schématique simplifiée de la plateforme et de ses moyens d'entraînement en déplacement en monte et baisse dans la position correspondant à la position intermédiaire de transport de la plateforme.
- La figure 12 représente une vue schématique simplifiée de la plateforme et de ses moyens d'entraînement en déplacement en monte et baisse dans la position correspondant à la position basse d'appui au sol de la plateforme.

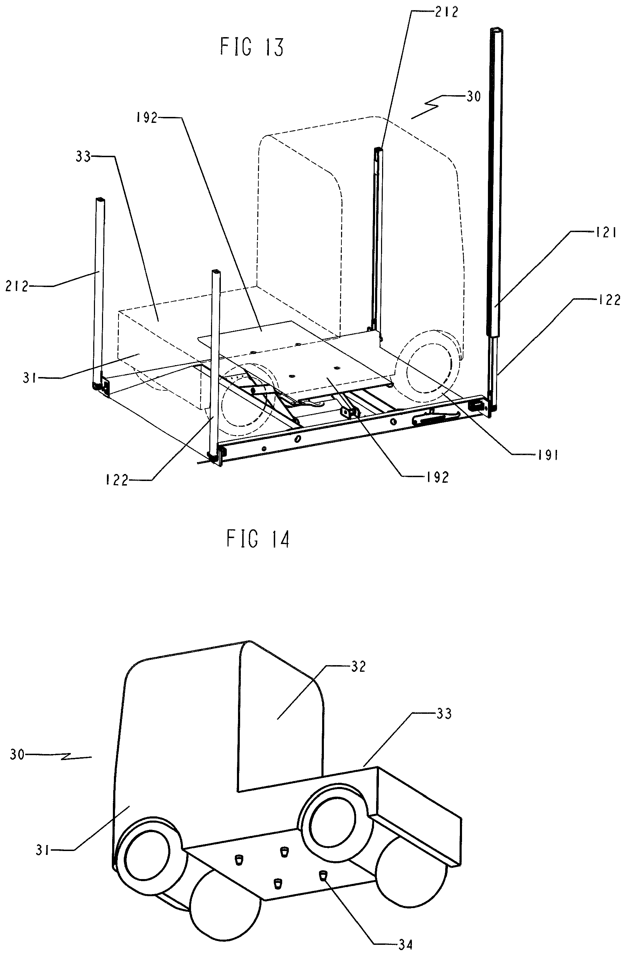

- La figure 13 représente une vue schématique partielle simplifiée de la plateforme et des montants dans la position anti-abaissement de l'un des éléments de la plateforme, le véhicule léger ayant été représenté en pointillés.
- La figure 14 représente une vue schématique prise de dessous du véhicule léger.

### DESCRIPTION DÉTAILLÉE

Comme mentionné ci-dessus, l'invention a pour objet un véhicule 1 de transport utilitaire et un véhicule 30 léger apte à être transporté par le véhicule 1 de transport utilitaire pour former, avec ledit véhicule de transport utilitaire, une base logistique mobile.

Un tel véhicule 1 de transport utilitaire est plus particulièrement destiné à permettre, en coopération avec un véhicule 30 léger, la livraison et la prise en charge de marchandises dans des centres-villes où l'accès pour des véhicules lourds est difficile. Il doit être noté que l'on entend généralement par véhicule léger, un véhicule dont le poids total en charge est inférieur à deux tonnes. Ce véhicule léger peut affecter un grand nombre de formes. Ce véhicule 30 léger comprend un châssis 31 roulant équipé d'un plateau 33 de transport de charge, et d'un poste 32 de pilotage. Le dessous du plateau de transport de charge 33 peut être équipé de plots 34 dont le rôle sera décrit ci-après.

Dans l'exemple représenté, le véhicule léger est un véhicule électrique qui présente une largeur extérieure de l'ordre de 1,25 mètre, une longueur de l'ordre de 2,40 mètres, une vitesse maximale voisine de 80 km/h et une charge utile de l'ordre de 800 kilos.

Le véhicule de transport utilitaire, sur lequel un tel véhicule léger peut être embarqué, comprend quant à lui, depuis l'avant en direction de l'arrière du véhicule, un poste 2 de pilotage, une enceinte 3 de stockage de charges munie d'un plancher 4 sur lequel les charges sont aptes à être stockées, et un emplacement 5, apte à recevoir ledit véhicule 30 léger. À l'intérieur dudit emplacement 5, le véhicule 30 léger s'étend avec son axe longitudinal disposé transversalement à l'axe longitudinal du véhicule de transport utilitaire.

Dans les exemples représentés, ledit emplacement 5 se présente sous forme d'une cellule 6, de forme générale parallélipédique. Cette cellule 6 peut être couplée de manière amovible ou inamovible à l'enceinte 3 de stockage. Elle peut ainsi être installée en première monte, ou être rapportée sur des véhicules préexistants, en rallongeant ledit véhicule. Dans le cas d'une installation en première monte, certaines parties de la cellule et de l'enceinte 3 de stockage peuvent être réalisées d'une seule pièce.

Cette cellule 6 comprend une face 7 avant comportant une ouverture 18 de communication de la cellule 6 avec l'enceinte 3 de stockage, une face 8 arrière opposée à la face 7 avant de la cellule 6, deux faces 9 latérales, une face 10 du dessus formant toit, et une face 11 du dessous formant plancher.

La face 8 arrière de la cellule 6 est délimitée par deux montants 12 reliés entre eux en partie basse par une traverse 13 apte à former le pare-chocs et la barre anti-encastrement du véhicule 1 de transport utilitaire.

L'espace 17 de la face 8 arrière laissé libre au-dessus de la traverse 13 basse entre les montants 12 est apte à être fermé au moins partiellement par un élément 140 de fermeture, tel qu'un volet roulant, se déplaçant depuis l'extrémité haute des montants, en direction de l'extrémité basse des montants, pour le passage de la position ouverte à la position fermée.

La face 8 arrière de la cellule est, au niveau des faces 9 latérales, reliée en partie haute à la face 7 avant de la cellule, par une liaison de type pont 15, pour délimiter, au niveau de chaque face 9 latérale, en coopération avec le pont 15 de liaison et la face 7 avant, une ouverture 16 dite latérale obturable, apte à permettre le chargement/déchargement du véhicule 30 léger.

La face 11 du dessous de la cellule 6 est quant à elle une plateforme 19 mobile reliée aux faces 7 avant et 8 arrière de la cellule 6, par des organes 20 de liaison pour un déplacement en monte et baisse de ladite plateforme entre au moins trois positions, à savoir une position basse d'appui au sol dans laquelle le véhicule 30 léger est apte à être chargé/déchargé de la plateforme 19 à travers une ouverture 16 latérale de la cellule 6, une position intermédiaire dite de transport dans laquelle la plateforme 19 de la cellule 6 s'étend à un niveau inférieur à celui du plancher 4 de l'enceinte 3 de stockage du véhicule 1 de transport utilitaire pour permettre un positionnement sensiblement coplanaire du plancher 4 de l'enceinte 3 de stockage et du plateau 33 de transport de charge du véhicule 30 léger en vue d'un transfert de charges entre véhicule 30 léger et plancher 4 de l'enceinte 3 de stockage du véhicule 1 de transport utilitaire et une position haute dite de chargement/déchargement à quai dans laquelle la plateforme 19 de la cellule 6 et le plancher 4 de l'enceinte 3 de stockage du véhicule 1 de transport utilitaire sont coplanaires en vue d'un transfert de charge entre plateforme 19 et plancher 4.

La plateforme 19 de la cellule 6 s'étend dans chacune de ses positions à l'aplomb de la face 10 du dessus formant toit de la cellule 6. Le véhicule léger prend, lui, place, à chaque fois, sur ladite plateforme 19.

On note qu'en position haute de la plateforme 19, la plateforme 19 s'étend au-dessus de la base des faces avant et arrière de la cellule 6. En effet, à l'état couplé à l'enceinte 3 de stockage, la cellule est suspendue, c'est-à-dire les faces avant, arrière et latérales s'étendent au-dessus du sol, avec leur base s'étendant au-dessous du plancher de l'enceinte 3 de stockage du véhicule de transport utilitaire.

Dans l'exemple représenté, la face 7 avant est délimitée au moins par deux montants 21. Les montants 21 de délimitation de la face avant 7 et 12 de limitation de la face arrière 8 sont dits télescopiques et comprennent chacun une partie fixe 211, 121 et une partie mobile 212, 122 d'extension du montant 21, 12 dit télescopique et les organes 20 de liaison entre la plateforme 19 et les faces avant 7 et arrière 8 sont formés au moins par la partie mobile 212, 122 télescopique desdits montants 21, 12. Ainsi, la partie mobile de chaque montant affecte la forme d'un rail ou d'une glissière guidé à coulissement le long de la partie fixe dudit montant. Cette partie mobile peut s'étendre dans le prolongement de la partie fixe du montant, en position basse de la plateforme, au niveau de l'extrémité inférieure de la partie fixe du montant en position intermédiaire de transport de la plateforme et au-dessus de l'extrémité inférieure de la partie fixe du montant en position haute de la plateforme 19 de la cellule 6.

Pour permettre un déplacement en monte et baisse de la partie mobile des montants, la cellule 6 comprend des moyens 22 d'entraînement en déplacement des parties mobiles 212, 122 des montants 21 et 12. Ces moyens 22 d'entraînement sont logés au moins partiellement à l'intérieur desdits montants 21 et 12. Ces moyens 22 d'entraînement en déplacement des parties mobiles 212, 122 des montants peuvent affecter un grand nombre de formes.

Dans l'exemple représenté, les moyens 22 d'entraînement en déplacement des parties mobiles 212, 122 des montants 21, 12 comprennent des câbles 221, des poulies 222 pour un montage en moufle desdits câbles 221, et au moins un vérin 223 d'entraînement en déplacement desdits câbles 221. Ainsi, le vérin 223 est disposé au niveau de la face avant de la cellule, dans la partie basse de la cellule qui s'étend au-dessous du plancher de l'enceinte 3 de stockage du véhicule de transport utilitaire. Ce vérin 223 entraîne en déplacement une poulie dite principale, suivant une direction transversale à l'axe longitudinal du véhicule de transport utilitaire. Autour de cette poulie principale, s'enroulent plusieurs séries de câbles 221 après un trajet le long de poulies auxiliaires disposées notamment aux angles supérieurs de la cellule 6. Ces séries de câbles s'accrochent, l'une ou les unes aux parties mobiles ou à la plateforme jouxtant les parties mobiles des montants 12 de délimitation de la face arrière, l'autre ou les autres aux parties mobiles ou à la plateforme jouxtant les parties mobiles des montants 21 de délimitation de la face avant de la cellule.

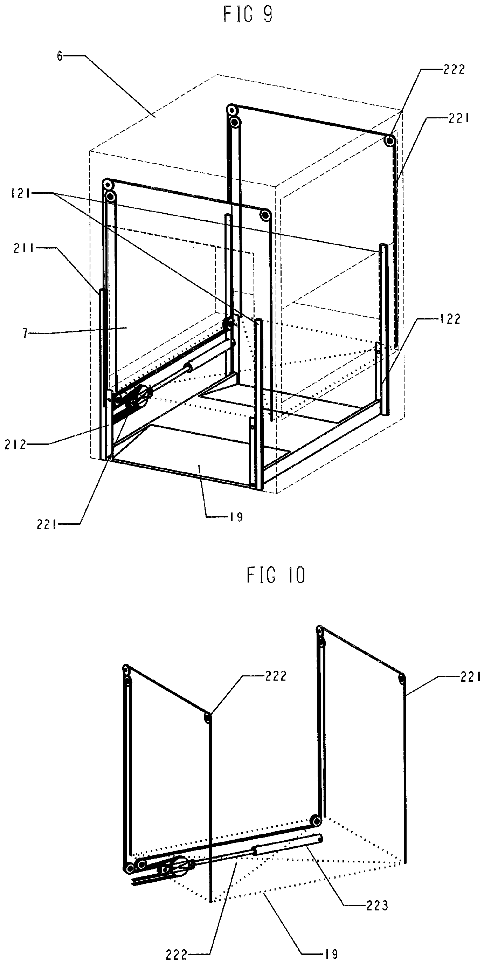

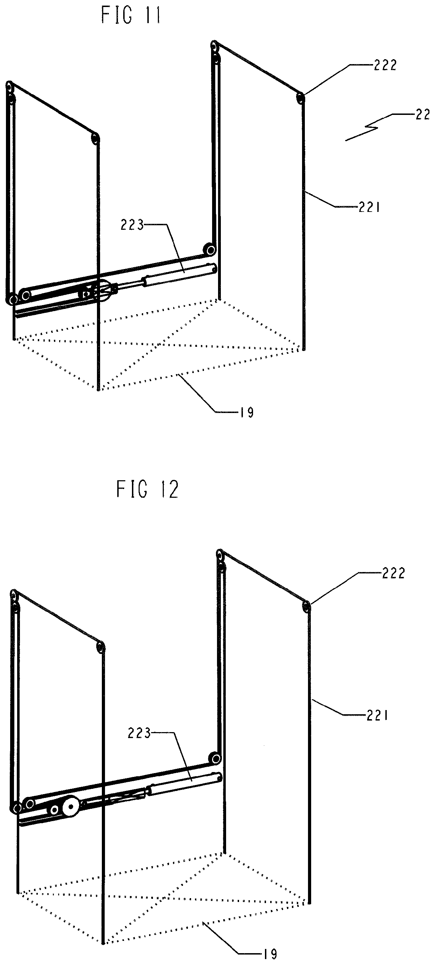

Ainsi, comme l'illustrent les figures 9 à 12, la rentrée de la tige du vérin 223 entraîne une montée de la plateforme à l'aide des câbles tirant sur la plateforme ou sur les parties mobiles des montants auxquelles la plateforme est fixée, tandis que la sortie de la tige du vérin 223 entraîne, sous l'effet du poids de la plateforme et du relâchement des câbles, un abaissement de la plateforme 19. Grâce à ce système de câbles, la plateforme 19 et les parties mobiles des montants peuvent former une extension des parties fixes des montants ou s'étendre le long des parties fixes des montants, à un niveau fonction du niveau souhaité pour ladite plateforme 19.

Pour permettre un maintien stable de la plateforme 19 au moins en position intermédiaire de transport, et éventuellement en position haute, le véhicule de transport utilitaire est équipé de moyens 23 de verrouillage. Ces moyens 23 de verrouillage comprennent un verrou, tel qu'un organe escamotable, de type vérin, plot, chargé par ressort ou équivalent, porté par la plateforme 19, ce verrou étant apte, en position verrouillée, à s'insérer dans un logement ménagé sur les faces latérales de la cellule.

Généralement, la plateforme 19 comporte un verrou à chacun de ses angles. Le passage de chacun des verrous de la position verrouillée à la position déverrouillée et inversement, peut être commandé manuellement par le conducteur, depuis le poste 2 de pilotage du véhicule de transport utilitaire, ou à l'aide d'organes de commande disposés sur ou à proximité de la cellule, ou automatiquement, en fonction de conditions prédéterminées. Lorsque la position haute de la plateforme est également verrouillée, une deuxième série de logements aptes à coopérer avec les verrous est prévue sur les faces latérales de la cellule. Enfin, pour éviter tout risque d'accident, le véhicule de transport utilitaire comprend des moyens 24 anti-démarrage ou d'émission d'un signal d'alerte en position basse d'appui au sol de la plateforme 19 de la cellule 6. Ainsi, un signal d'alarme sonore ou visuel peut être actif dans le poste 2 de pilotage, tant que la plateforme 19 est en position basse d'appui au sol.

Pour fermer les faces latérales avant et arrière de la cellule, qui sont des faces partiellement ouvertes, ladite cellule comprend des éléments de fermeture, généralement formés de volets roulants. Dans l'exemple représenté, les faces avant, arrière et latérales sont chacune obturables à l'aide d'un volet roulant qui se déplace depuis la partie haute de la cellule, en direction de la partie basse de la cellule. Ainsi, l'élément 140 de fermeture de la face 8 arrière est un volet roulant qui s'étend entre les montants 12 de la face 8 arrière, en partie haute de ladite face. De même, l'élément 141 de fermeture de la face 7 avant est un volet roulant qui s'étend entre les montants 22 de la face 7 avant, en partie haute de ladite face.

L'élément 142 de fermeture d'une face latérale 9 est un volet roulant qui s'étend au niveau du pont 15 de liaison, entre les faces avant et arrière, et qui est apte à fermer au moins partiellement l'espace s'étendant sous ledit pont de liaison.

Grâce à ces éléments de fermeture, la cellule peut être entièrement fermée en position intermédiaire de transport de la plateforme, ou en position haute de la plateforme 19. En effet, les éléments 142 de fermeture des faces latérales de l'enceinte ne descendent pas jusqu'à la plateforme 19 lorsque celle-ci est en position basse d'appui au sol.

Enfin, pour aider, d'une part, au chargement et au déchargement du véhicule léger, d'autre part, au maintien en position du véhicule léger à l'intérieur du véhicule de transport utilitaire, la plateforme 19 est de conception particulière. En effet, la plateforme 19 de la cellule 6 comprend des éléments 191, 192 de plateforme formant plateau, disposés côte à côte depuis une face 9 latérale, en direction de l'autre face 9 latérale de la cellule 6. Dans l'exemple représenté, ces éléments de plateforme sont au nombre de trois, et sont portés par un support commun appelé bâti de la plateforme. L'élément de plateforme médian est monté mobile en monte et baisse par rapport audit bâti de la plateforme grâce à un dispositif d'élévation de type ciseaux disposé entre le bâti et ledit élément de plateforme.

Cet élément 192 de plateforme est apte à former, en position haute, une butée anti-abaissement du plateau 33 de transport de charge du véhicule 30 léger à l'état positionné du véhicule 30 léger sur ladite plateforme 19 de la cellule 6.

Pour parfaire un maintien du véhicule léger, cet élément 192 de plateforme comprend des logements à l'intérieur desquels les plots 34 précédemment décrits du véhicule léger s'insèrent en position haute de l'élément 192 de plateforme.

Les éléments 19 d'extrémité de la plateforme sont quant à eux chacun montés sur le bâti support, à pivotement autour d'un axe s'étendant sensiblement parallèlement à l'axe longitudinal du véhicule 1 de transport utilitaire, pour permettre le passage desdits éléments 191 de plateforme d'une position dite horizontale dans laquelle ils s'étendent de manière coplanaire, à une position inclinée dans laquelle ils sont inclinés à pente descendante, depuis l'intérieur en direction de l'extérieur de la cellule 6, pour former une rampe de circulation du véhicule léger.

Pour permettre un tel déplacement à pivotement des éléments 191 d'extrémité de la plateforme, des cames 25 actionnables par un vérin sont disposées sous lesdits éléments de plateforme, et assurent un point d'appui variable de l'élément 191 de plateforme. Une partie de ces cames 25 est visible au niveau des côtés de la plateforme comme illustré aux figures. À nouveau, ce déplacement à pivotement des éléments 191 de plateforme peut être commandé manuellement par le conducteur de véhicule de transport utilitaire, ou automatiquement, par exemple à l'aide d'un capteur de détection de la position d'appui au sol de la plateforme 19.

La position coplanaire des éléments de plateforme est utile en position haute de la plateforme 19, pour faciliter un transfert de charge entre l'enceinte de stockage du véhicule de transport utilitaire et un quai, tandis que la position inclinée est utile en position basse d'appui au sol de la plateforme 19, pour faciliter la montée et la descente du véhicule léger de la plateforme 19.

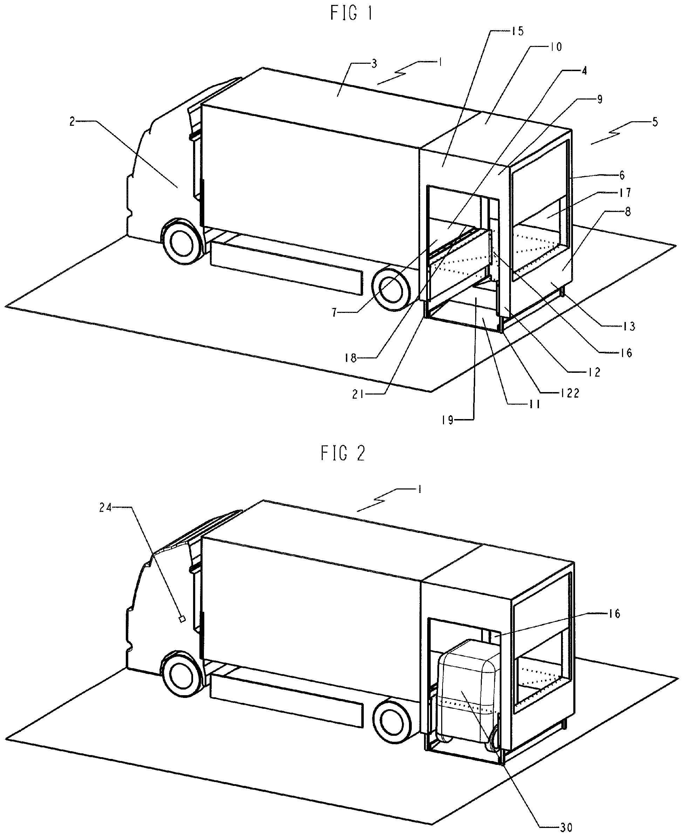

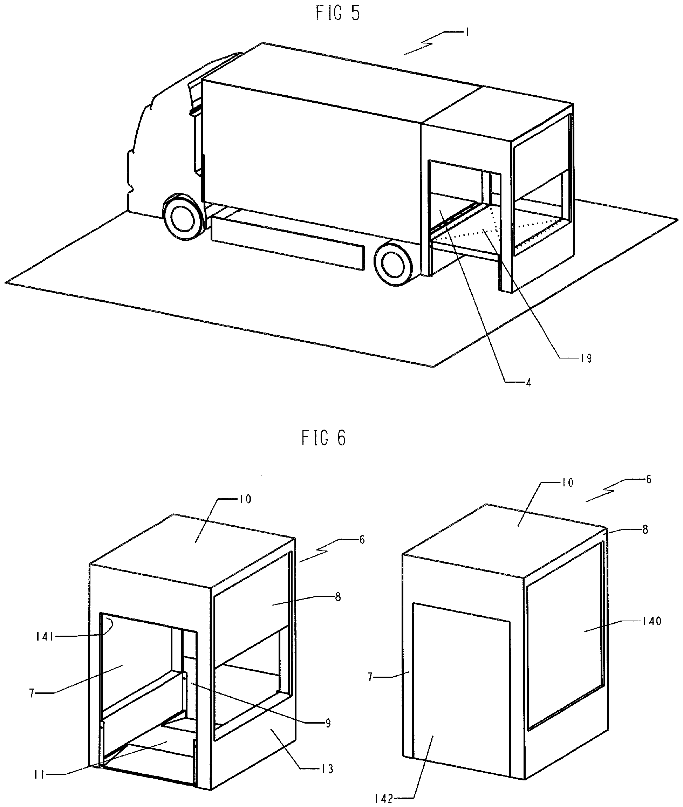

Un véhicule de transport utilitaire, tel que décrit ci-dessus, peut s'utiliser comme suit : le véhicule de transport utilitaire étant disposé à quai, et la plateforme 19 étant en position haute verrouillée, comme illustré à la figure 5, le véhicule de transport utilitaire est chargé en charges, par exemple à l'aide d'un chariot élévateur, de manière en soi connue. Une fois le chargement de l'enceinte 3 de stockage opéré, la plateforme 19 est amenée en position basse d'appui au sol, comme illustré à la figure 1, et un véhicule 30 léger est introduit par une face latérale de la cellule 6, à l'intérieur de ladite cellule. La plateforme 19 est élevée jusqu'à une position intermédiaire de transport, et verrouillée dans ladite position. De même, l'élément médian 192 de plateforme est élevé, pour empêcher un abaissement du plateau 33 de transport du véhicule 30 léger. Au moins les faces latérales et arrière de la cellule sont obturées à l'aide des éléments de fermeture desdites faces.

Une fois le véhicule de transport utilitaire sur site, c'est-à-dire en un emplacement éloigné du lieu final de livraison, des charges sont transférées de l'enceinte 3 de stockage sur le plateau 33 de transport du véhicule 30 léger, puis l'élément médian 192 de plateforme est abaissé, et la plateforme 19 est déverrouillée et amenée en position basse d'appui au sol. Le véhicule 30 léger est sorti de la cellule 6 et peut parfaire la livraison de son chargement. Pendant ce temps de livraison, le véhicule de transport utilitaire peut rester inutilisé ou effectuer une livraison sur un autre site, accessible par ledit véhicule de transport utilitaire, après éventuellement rechargement de l'espace laissé libre dans la cellule. Le rechargement peut s'effectuer à l'aide d'un transpalette agissant au niveau de la cellule latéralement ou depuis l'arrière. Dans ce cas, pendant le transport, la plateforme 19 peut être en positon haute verrouillée. Quand la livraison est achevée, le véhicule de transport utilitaire rejoint son emplacement de récupération du véhicule léger. Ainsi, grâce à la conception de la cellule et de la plateforme 19 élévatrice associée, il est possible d'optimiser l'utilisation de l'espace de la cellule pour, au choix, transporter un véhicule léger ou des charges voire un transpalette, le véhicule de transport utilitaire étant, dans ce cas, utilisé comme un véhicule de transport utilitaire traditionnel, chargeable par exemple à quai. Il offre en sus la possibilité d'un chargement latéral.

## Revendications

1. Véhicule (1) de transport utilitaire comprenant, depuis l'avant en direction de l'arrière du véhicule (1), un poste (2) de pilotage, une enceinte (3) de stockage de charges munie d'un plancher (4) sur lequel les charges sont aptes à être stockées et un emplacement (5) apte à recevoir un véhicule (30) léger, ledit véhicule (30) léger comprenant un plateau (33) de transport de charges, ce véhicule (30) léger étant destiné à s'étendre à l'intérieur dudit emplacement (5) avec son axe longitudinal disposé transversalement à l'axe longitudinal du véhicule (1) de transport utilitaire,
ledit emplacement (5), apte à recevoir un véhicule (30) léger, se présentant sous forme d'une cellule (6) comprenant une face (7), dite avant, de communication de la cellule (6) avec l'enceinte (3) de stockage, une face (8) dite arrière opposée à la face (7) avant de la cellule (6), deux faces (9) latérales, une face (10) du dessus formant toit et une face (11) du dessous formant plancher, la face (8) arrière de la cellule (6) étant délimitée par deux montants (12) reliés entre eux, en partie basse, par une traverse (13) apte à former le pare-chocs et la barre anti-encastrement du véhicule (1) de transport utilitaire, **caractérisé**
**en ce que** l'espace de la face (8) arrière laissé libre, au-dessus de la traverse (13) basse, entre les montants (12), est apte à être fermé au moins partiellement par un élément (140) de fermeture, tel qu'un volet roulant, **en ce que** la face (8) arrière de la cellule (6) est, au niveau des faces (9) latérales, reliée, en partie haute, à la face (7) avant de la cellule (6), par une liaison de type pont (15), pour délimiter au niveau de chaque face (9) latérale, en coopération avec le pont (15) de liaison et la face (7) avant, une ouverture (16) dite latérale obturable apte à permettre le chargement/déchargement du véhicule (30) léger, **en ce que** la face (11) du dessous de la cellule (6) est une plateforme (19) mobile reliée aux faces avant (7) et arrière (8) de la cellule (6) par des organes (20) de liaison pour un déplacement en monte et baisse de ladite plateforme (19) entre au moins trois positions, à savoir une position basse d'appui au sol dans laquelle le véhicule (30) léger est apte à être chargé/déchargé de la plateforme (19) à travers une ouverture (16) latérale de la cellule (6), une position intermédiaire, dite de transport, dans laquelle la plateforme (19) de la cellule (6) s'étend à un niveau inférieur à celui du plancher (4) de l'enceinte (3) de stockage du véhicule (1) de transport utilitaire pour permettre un positionnement sensiblement coplanaire du plancher (4) de l'enceinte (3) de stockage et du plateau (33) de transport de charge du véhicule (30) léger en vue d'un transfert de charge entre véhicule (30) léger et plancher (4) de l'enceinte (3) de stockage du véhicule (1) de transport utilitaire et une position haute, dite de chargement/déchargement à quai, dans laquelle la plateforme (19) de la cellule (6) et le plancher (4) de l'enceinte (3) de stockage du véhicule (1) de transport utilitaire sont coplanaires en vue d'un transfert de charge entre plateforme (19) et plancher (4), ladite plateforme (19) de la cellule (6) s'étendant, dans chacune de ces positions, à l'aplomb de la face (10) du dessus formant toit de la cellule (6).

2. Véhicule (1) de transport utilitaire selon la revendication 1,
**caractérisé en ce que** la face (7) avant est délimitée au moins par deux montants (21), **en ce que** les montants (21, 12) de délimitation des faces avant (7) et arrière (8) sont dits télescopiques et comprennent chacun une partie fixe (211, 121) et une partie mobile (212, 122) d'extension du montant (21, 12) dit télescopique et **en ce que** les organes (20) de liaison entre la plateforme (19) et les faces avant (7) et arrière (8) sont formés au moins par la partie mobile (212, 122) télescopique desdits montants (21, 12).

3. Véhicule (1) de transport utilitaire selon la revendication 2,
**caractérisé en ce que** la cellule (6) comprend des moyens (22) d'entraînement en déplacement des parties mobiles (212, 122) des montants (21, 12), ces moyens (22) d'entraînement étant logés au moins partiellement à l'intérieur desdits montants (21, 12).

4. Véhicule (1) de transport utilitaire selon la revendication 3,
**caractérisé en ce que** les moyens (22) d'entraînement en déplacement des parties mobiles (212, 122) des montants (21, 12) comprennent des câbles (221), des poulies (222) pour un montage en moufle desdits câbles (221) et au moins un vérin (223) d'entraînement en déplacement desdits câbles (221).

5. Véhicule (1) de transport utilitaire selon l'une des revendications précédentes,
**caractérisé en ce qu'**au niveau de chaque face (9) latérale, l'espace laissé libre sous le pont (15) de liaison entre la face arrière (8) et la face avant (7) de la cellule (6) est un espace au moins partiellement obturable apte à être fermé par un élément (142) de fermeture, tel qu'un volet roulant.

6. Véhicule (1) de transport utilitaire selon l'une des revendications précédentes,
**caractérisé en ce que** la face avant (7) de communication de la cellule (6) avec l'enceinte (3) de stockage est une face obturable à l'aide d'un élément (141) de fermeture, tel qu'un volet roulant.

7. Véhicule (1) de transport utilitaire selon l'une des revendications précédentes,
**caractérisé en ce qu'**il comprend des moyens (23) de verrouillage de la plateforme (19) au moins en position intermédiaire de transport.

8. Véhicule (1) de transport utilitaire selon l'une des revendications précédentes,
**caractérisé en ce qu'**il comprend des moyens (24) anti-démarrage ou d'émission d'un signal d'alerte en position basse d'appui au sol de la plateforme (19) de la cellule (6).

9. Véhicule (1) de transport utilitaire selon l'une des revendications précédentes,
**caractérisé en ce que** la plateforme (19) de la cellule (6) comprend des éléments (191, 192) de plateforme formant plateau disposés côte à côte depuis une face (9) latérale en direction de l'autre face (9) latérale de la cellule (6), au moins deux (191) des éléments (191, 192) de plateforme formant plateau étant montés chacun à pivotement autour d'un axe s'étendant sensiblement parallèlement à l'axe longitudinal du véhicule (1) de transport utilitaire pour permettre le passage desdits éléments (191) de plateforme d'une position dite horizontale, dans laquelle ils s'étendent de manière coplanaire, à une position inclinée dans laquelle ils sont inclinés à pente descendante depuis l'intérieur en direction de l'extérieur de la cellule (6) pour former une rampe de circulation.

10. Véhicule (1) de transport utilitaire selon l'une des revendications précédentes,
**caractérisé en ce que** la plateforme (19) de la cellule (6) comprenant des éléments (191, 192) de plateforme formant plateau disposés côte à côte depuis une face (9) latérale en direction de l'autre face (9) latérale de la cellule (6), au moins l'un (192) des éléments (191, 192) de plateforme est monté mobile en monte et baisse, cet élément (192) de plateforme étant apte à former, en position haute, une butée anti-abaissement du plateau (33) de transport de charge du véhicule (30) léger à l'état positionné dudit véhicule (30) léger sur ladite plateforme (19) de la cellule (6).

11. Base logistique mobile comprenant un véhicule (1) de transport utilitaire et un véhicule (30) léger, ledit véhicule (30) léger comprenant un plateau (33) de transport de charges,
**caractérisée en ce que** le véhicule (1) de transport utilitaire de la base logistique mobile est conforme à l'une des revendications 1 à 10.

12. Cellule (6) notamment pour le transport d'un véhicule (30) léger comprenant un plateau (33) de transport de charges, ladite cellule (6) étant positionnable à l'arrière d'une enceinte (3) de stockage de charges munie d'un plancher (4) et disposée dans le prolongement d'un poste (2) de conduite en vue de la réalisation d'un véhicule (1) de transport utilitaire conforme à l'une des revendications 1 à 10, le véhicule (30) léger étant destiné à s'étendre à l'intérieur de ladite cellule (6) avec son axe longitudinal disposé transversalement à l'axe longitudinal du véhicule (1) de transport utilitaire à l'état couplé de la cellule (6) à ladite enceinte (3) de stockage,
**caractérisée en ce que** la cellule (6) comprend une face (7) dite avant couplable à l'enceinte (3) de stockage et apte à permettre la communication de la cellule (6) avec l'enceinte (3) de stockage, une face (8) dite arrière opposée à la face (7) avant de la cellule (6), deux faces (9) latérales, une face (10) du dessus formant toit et une face (11) du dessous formant plancher, **en ce que** la face (8) arrière de la cellule (6) est délimitée par deux montants (12) reliés entre eux en partie basse par une traverse (13) apte à former le pare-chocs et la barre anti-encastrement du véhicule (1) de transport utilitaire à l'état couplé de la cellule (6) à l'enceinte (3) de stockage du véhicule (1) de transport utilitaire, **en ce que** l'espace de la face arrière (8) laissé libre au-dessus de la traverse (13) basse entre les montants (12) est apte à être fermé au moins partiellement par un élément (140) de fermeture, tel qu'un volet roulant, **en ce que** la face (8) arrière de la cellule (6) est, au niveau des faces (9) latérales, reliée, en partie haute, à la face (7) avant de la cellule (6), par une liaison de type pont (15), pour délimiter au niveau de chaque face (9) latérale, en coopération avec le pont (15) de liaison et la face (7) avant, une ouverture (16) dite latérale obturable apte à permettre le chargement/déchargement du véhicule (30) léger, **en ce que** la face (11) du dessous de la cellule (6) est une plateforme (19) mobile reliée aux faces avant (7) et arrière (8) de la cellule (6) par des organes (20) de liaison pour permettre à l'état couplé de manière suspendue de la cellule (6) à l'enceinte (3) de stockage d'un véhicule (1) de transport utilitaire un déplacement en monte et baisse de ladite plateforme (19) entre au moins trois positions, à savoir une position basse d'appui au sol dans laquelle le véhicule (30) léger est apte à être chargé/déchargé de la plateforme (19) de la cellule (6) à travers une ouverture (16) latérale de la cellule (6), une position intermédiaire dite de transport dans laquelle la plateforme (19) de la cellule (6) est apte à s'étendre à un niveau inférieur à celui du plancher (4) de l'enceinte (3) de stockage du véhicule (1) de transport utilitaire pour permettre un positionnement sensiblement coplanaire du plancher (4) de l'enceinte (3) de stockage et du plateau (33) de transport de charge du véhicule (30) léger en vue d'un transfert de charge entre véhicule (30) léger et plancher (4) de l'enceinte (3) de stockage du véhicule (1) de transport utilitaire et une position haute, dite de chargement/déchargement à quai, dans laquelle la plateforme (19) de la cellule (6) est apte à s'étendre de manière coplanaire avec le plancher (4) de l'enceinte (3) de stockage du véhicule (1) de transport utilitaire en vue d'un transfert de charge entre plateforme (19) et plancher (4), ladite plateforme (19) de la cellule (6) s'étendant dans chacune de ces positions à l'aplomb de la face (10) formant toit de la cellule (6).

## Patentansprüche

1. Nutzfahrzeug (1), umfassend, vom Frontbereich zum Heckbereich des Fahrzeugs (1), eine Steuerkabine (2), einen Lastenlagerraum (3), der mit einem Boden (4) versehen ist, auf dem die Lasten gelagert werden können, und einen Platz (5), der geeignet ist, um ein leichtes Fahrzeug (30) aufzunehmen, wobei das leichte Fahrzeug (30) eine Lastentransportauflage (33) umfasst, wobei dieses leichte Fahrzeug (30) dazu gedacht ist, sich im Innern des Platzes (5) zu erstrecken, wobei seine Längsachse quer zur Längsachse des Nutzfahrzeugs (1) angeordnet ist,
wobei der Platz (5), der geeignet ist, um ein leichtes Fahrzeug (30) aufzunehmen, in der Form einer Zelle (6) vorliegt, die eine so genannte vordere Seite (7) zur Verbindung der Zelle (6) mit dem Lagerraum (3), eine so genannte hintere Seite (8), die der vorderen Seite (7) der Zelle (6) gegenüberliegt, zwei seitliche Seiten (9), eine obere Dachseite (10) und eine untere Bodenseite (11) umfasst, wobei die hintere Seite (8) der Zelle (6) durch zwei Pfosten (12) begrenzt ist, die im unteren Bereich durch eine Querstrebe (13) miteinander verbunden sind, die dazu geeignet ist, den Stoßdämpfer und den Unterfahrschutz des Nutzfahrzeugs (1) zu bilden,
**dadurch gekennzeichnet, dass** der freigelassene Raum der hinteren Seite (8) über der unteren Querstrebe (13) zwischen den Pfosten (12) geeignet ist, um mindestens teilweise durch ein Schließelement (140), wie etwa einen Rollladen, geschlossen zu werden, dass die hintere Seite (8) der Zelle (6) an den seitlichen Seiten (9) im oberen Bereich mit der vorderen Seite (7) der Zelle (6) durch eine brückenartige Verbindung (15) verbunden ist, um an jeder seitlichen Seite (9) in Zusammenwirkung mit der Verbindungsbrücke (15) und vorderen Seite (7) eine so genannte verschließbare seitliche Öffnung (16) zu bilden, die geeignet ist, um das Auf-/Abladen des leichten Fahrzeugs (30) zu ermöglichen, dass die obere Seite (11) der Zelle (6) eine bewegliche Plattform (19) ist, die mit den vorderen (7) und hinteren (8) Seiten der Zelle (6) durch Verbindungselemente (20) für eine anhebende und absenkende Verlagerung der Plattform (19) zwischen mindestens drei Positionen verbunden ist, nämlich einer unteren Bodenauflageposition, in der das leichte Fahrzeug (30) durch eine seitliche Öffnung (16) der Zelle (6) hindurch auf die Plattform (19) aufgeladen bzw. von dieser abgeladen werden kann, einer so genannten Transportzwischenposition, in der sich die Plattform (19) der Zelle (6) auf einem niedrigeren Niveau als dem des Bodens (4) des Lagerraums (3) des Nutzfahrzeugs (1) erstreckt, um eine im Wesentlichen koplanare Positionierung des Bodens (4) des Lagerraums (3) und der Lasttransportauflage (33) des leichten Fahrzeugs im Hinblick auf eine Lastübertragung zwischen dem leichten Fahrzeug (30) und dem Boden (4) des Lagerraums (3) des Nutzfahrzeugs (1) zu ermöglichen, und einer oberen so genannten Auf-/Abladeposition an einer Laderampe, wobei die Plattform (19) der Zelle (6) und der Boden (4) des Lagerraums (3) des Nutzfahrzeugs (1) im Hinblick auf eine Lastübertragung zwischen der Plattform (19) und dem Boden (4) koplanar sind, wobei sich die Plattform (19) der Zelle (6) in jeder dieser Positionen lotrecht von der oberen Seite (10), die das Dach der Zelle (6) bildet, aus erstreckt.

2. Nutzfahrzeug (1) nach Anspruch 1, **dadurch gekennzeichnet, dass** die vordere Seite (7) durch mindestens zwei Pfosten (21) begrenzt ist, dass die Pfosten (21, 12) zum Begrenzen der vorderen (7) und hinteren (8) Seiten so genannte Teleskoppfosten sind und jeweils einen feststehenden Teil (211, 121) und einen beweglichen Teil (212, 122) zum Ausfahren des so genannten Teleskoppfostens (21, 12) umfassen, und dass die Verbindungselemente (20) zwischen der Plattform (19) und den vorderen (7) und hinteren (8) Seiten mindestens durch den beweglichen Teleskopteil (212, 122) der Pfosten (21, 12) gebildet werden.

3. Nutzfahrzeug (1) nach Anspruch 2, **dadurch gekennzeichnet, dass** die Zelle (6) Mittel (22) zum Verlagerungsantrieb der beweglichen Teile (212, 122) der Pfosten (21, 12) umfasst, wobei diese Antriebsmittel (22) mindestens teilweise innerhalb der Pfosten (21, 12) aufgenommen sind.

4. Nutzfahrzeug (1) nach Anspruch 3, **dadurch gekennzeichnet, dass** die Mittel (22) zum Verlagerungsantrieb der beweglichen Teile (212, 122) der Pfosten (21, 12) Seile (221), Seilrollen (222) für eine Flaschenzugmontage der Seile (221) und mindestens einen Zylinder (223) zum Verlagerungsantrieb der Seile (221) umfassen.

5. Nutzfahrzeug (1) nach einem der vorhergehenden Ansprüche, **dadurch gekennzeichnet, dass** an jeder seitlichen Seite (9) der Raum, der unter der Verbindungsbrücke (15) zwischen der hinteren Seite (8) und der vorderen Seite (7) der Zelle (6) freigelassen wird, ein Raum ist, der mindestens teilweise verschließbar ist und geeignet ist, um durch ein Schließelement (142), wie etwa einen Rollladen, geschlossen zu werden.

6. Nutzfahrzeug (1) nach einem der vorhergehenden Ansprüche, **dadurch gekennzeichnet, dass** die vordere Seite (7) zur Verbindung der Zelle (6) mit dem Lagerraum (3) eine Seite ist, die anhand eines Schließelements (141), wie etwa eines Rollladens, verschließbar ist.

7. Nutzfahrzeug (1) nach einem der vorhergehenden Ansprüche, **dadurch gekennzeichnet, dass** es Mittel (23) zum Verriegeln der Plattform (19) mindestens in der Transportzwischenposition umfasst.

8. Nutzfahrzeug (1) nach einem der vorhergehenden Ansprüche, **dadurch gekennzeichnet, dass** es Mittel (24) zur Wegfahrsicherung oder zum Abgeben eines Warnsignals in der unteren Bodenauflageposition der Plattform (19) der Zelle (6) umfasst.

9. Nutzfahrzeug (1) nach einem der vorhergehenden Ansprüche, **dadurch gekennzeichnet, dass** die Plattform (19) der Zelle (6) Auflageplattformelemente (191, 192) umfasst, die von einer seitlichen Seite (9) zur anderen seitlichen Seite (9) der Zelle (6) nebeneinander angeordnet sind, wobei mindestens zwei (191) der Auflageplattformelemente (191, 192) jeweils um eine Achse herum schwenkend gelagert sind, die sich im Wesentlichen parallel zur Längsachse des Nutzfahrzeugs (1) erstreckt, um den Durchgang der Plattformelemente (191) von einer so genannten waagerechten Position, in der sie sich koplanar erstrecken, in eine geneigte Position, in der sie mit einem Gefälle vom Innern zum Äußeren der Zelle (6) geneigt sind, um eine Begehungsrampe zu bilden, zu ermöglichen.

10. Nutzfahrzeug (1) nach einem der vorhergehenden Ansprüche, **dadurch gekennzeichnet, dass** bei der Plattform (19) der Zelle (6), die Auflageplattformelemente (191, 192) umfasst, die von einer seitlichen Seite (9) der Zelle (6) zur anderen seitlichen Seite (9) der Zelle (6) nebeneinander angeordnet sind, mindestens eines (192) der Plattformelemente (191, 192) auf- und abwärts beweglich gelagert ist, wobei dieses Plattformelement (192) geeignet ist, um in einer oberen Position einen Anschlag gegen das Absenken der Lasttransportauflage (33) des leichten Fahrzeugs (30) in dem Zustand, in dem das leichte Fahrzeug (30) auf der Plattform (19) der Zelle (6) positioniert ist, zu bilden.

11. Mobile Logistikbasis, umfassend ein Nutzfahrzeug (1) und ein leichtes Fahrzeug (30), wobei das leichte Fahrzeug (30) eine Lasttransportplattform (33) umfasst, **dadurch gekennzeichnet, dass** das Nutzfahrzeug (1) der mobilen Logistikbasis mit einem der Ansprüche 1 bis 10 übereinstimmt.

12. Zelle (6), insbesondere für den Transport eines leichten Fahrzeugs (30), umfassend eine Lastentransportauflage (33), wobei die Zelle (6) im Heckbereich eines Lastenlagerraums (3) positionierbar ist, der mit einem Boden (4) versehen ist und in der Verlängerung einer Fahrerkabine (2) angeordnet ist, um ein Nutzfahrzeug (1) nach einem der Ansprüche 1 bis 10 auszubilden, wobei das leichte Fahrzeug (30) dazu gedacht ist, sich im Innern der Zelle (6) zu erstrecken, wobei seine Längsachse in dem Zustand, in dem die Zelle (6) mit dem Lagerraum (3) gekoppelt ist, quer zur Längsachse des Nutzfahrzeugs (1) angeordnet ist
**dadurch gekennzeichnet, dass** die Zelle (6) eine so genannte vordere Seite (7), die mit dem Lagerraum (3) koppelbar ist und geeignet ist, um die Verbindung der Zelle (6) mit dem Lagerraum (3) zu ermöglichen, eine so genannte hintere Seite (8), die der vorderen Seite (7) der Zelle (6) gegenüberliegt, zwei seitliche Seiten (9), eine obere Dachseite (10) und eine untere Bodenseite (11) umfasst, dass die hintere Seite (8) der Zelle (6) durch zwei Pfosten (12) begrenzt ist, die im unteren Bereich durch eine Querstrebe (13) miteinander verbunden sind, die dazu geeignet ist, den Stoßdämpfer und den Unterfahrschutz des Nutzfahrzeugs (1) zu bilden, in dem Zustand, indem die Zelle (6) mit dem Lagerraum (3) des Nutzfahrzeugs (1) gekoppelt ist, dass der freigelassene Raum der hinteren Seite (8) über der unteren Querstrebe (13) zwischen den Pfosten (12) geeignet ist, um mindestens teilweise durch ein Schließelement (140), wie etwa einen Rollladen, geschlossen zu werden, dass die hintere Seite (8) der Zelle (6) an den seitlichen Seiten (9) im oberen Bereich mit der vorderen Seite (7) der Zelle (6) über eine brückenartige Verbindung (15) verbunden ist, um an jeder seitlichen Seite (9) in Zusammenwirkung mit der Verbindungsbrücke (15) und vorderen Seite (7) eine so genannte verschließbare seitliche Öffnung (16) zu begrenzen, die geeignet ist, um das Auf-/Abladen des leichten Fahrzeugs (30) zu ermöglichen, dass die obere Seite (11) der Zelle (6) eine bewegliche Plattform (19) ist, die mit den vorderen (7) und hinteren (8) Seiten der Zelle (6) durch Verbindungselemente (20) verbunden ist, um in dem Zustand, in dem die Zelle (6) am Lagerraum (3) eines Nutzfahrzeugs (1) aufgehängt gekoppelt ist eine Auf- und Abwärtsverlagerung der Plattform (19) zwischen mindestens drei Positionen zu ermöglichen, nämlich einer unteren Bodenauflageposition, in der das leichte Fahrzeug (30) durch eine seitliche Öffnung (16) der Zelle (6) hindurch auf die Plattform (19) der Zelle (6) aufgeladen bzw. von dieser abgeladen werden kann, einer so genannten Transportzwischenposition, in der sich die Plattform (19) der Zelle (6) auf einem niedrigeren Niveau als dem des Bodens (4) des Lagerraums (3) des Nutzfahrzeugs (1) erstrecken kann, um eine im Wesentlichen koplanare Positionierung des Bodens (4) des Lagerraums (3) und der Lasttransportauflage (33) des leichten Fahrzeugs (30) im Hinblick auf eine Lastübertragung zwischen dem leichten Fahrzeug (30) und dem Boden (4) des Lagerraums (3) des Nutzfahrzeugs (1) zu ermöglichen, und einer oberen so genannten Auf-/Abladeposition an einer Laderampe, in der sich die Plattform (19) der Zelle (6) mit dem Boden (4) des Lagerraums (3) des Nutzfahrzeugs (1) im Hinblick auf eine Lastübertragung zwischen der Plattform (19) und dem Boden (4) koplanar erstrecken kann, wobei sich die Plattform (19) der Zelle (6) in jeder dieser Positionen lotrecht von der Seite (10), die das Dach der Zelle (6) bildet, aus erstreckt.

## Claims

1. A transmission utility vehicle (1) comprising, from the front toward the rear of the vehicle (1), a steering station (2), a housing (3) for storing charges provided with a floor (4) on which the charges can be stored and a location (5) for receiving a light vehicle, said light vehicle (30) comprising a charge transport plate (33), this light vehicle (30) being intended to extend inside said location (5) with its longitudinal axis arranged transversely to the longitudinal axis of the utility transport vehicle (1),
said location (5), able to receive a light vehicle, assuming the form of a cell (6) comprising a face (7), called front face, for communication of the cell (6) with the storage housing (3), a so-called rear face (8) opposite the front face (7) of the cell (6), two side faces (9), a top face (10) forming a roof and a bottom face (11) forming a floor, the rear face (8) of the cell (6) being delimited by two uprights (12) connected to one another, in the lower part, by a crosspiece (13) able to form the bumper and the underride guard of the utility transport vehicle (1), **characterized**
**in that** the area of the rear face (8) left free, above the lower crosspiece (13), between the uprights (12), is able to be closed at least partially by a closing element (140), such as a rolling shutter, in that the rear face (8) of the cell (6) is, at the side faces (9), connected, in the upper part, to the front face (7) of the cell (6), by a bridge-type connection (15), to delimit, at each side face (9), in cooperation with the connecting bridge (15) and the front face (7), a so-called side opening (16) able to allow the loading/unloading of the light vehicle (30), in that the bottom face (11) of the cell (6) is a moving platform (19) connected to the front (7) and rear (8) faces of the cell (6) by connecting members (20) for a raising and lowering movement of said platform (19) between at least three positions, i.e., a low position bearing on the ground in which the light vehicle (30) is able to be loaded/unloaded from the platform (19) through a side opening (16) of the cell (6), an intermediate position, called transport position, in which the platform (19) of the cell (6) extends at a level lower than that of the floor (4) of the storage housing (3) of the utility transport vehicle (1) to allow a substantially coplanar positioning of the floor (4) of the storage housing (3) and the charge transport plate (33) of the light vehicle (30) for a charge transfer between the light vehicle (30) and the floor (4) of the storage housing (3) of the utility transport vehicle (1) and a high position, called dock loading/unloading position, in which the platform (19) of the cell (6) and the floor (4) of the storage housing (3) of the utility transport vehicle (1) are coplanar for a charge transfer between the platform (19) and the floor (4), said platform (19) of the cell (6) extending, in each of these positions, plumb with the top face (10) forming the roof of the cell (6).

2. The utility transport vehicle (1) according to claim 1,
**characterized in that** the front face (7) is limited at least by two uprights (21), **in that** the uprights (21, 12) limiting the front (7) and rear (8) faces are said to be telescoping and each comprise a stationary part (211, 121) and a moving part (212, 122) for extension of the telescoping upright (21, 12) and **in that** the connecting members (20) between the platform (19) and the front (7) and rear (8) faces are formed at least by the telescoping moving part (212, 122) of said uprights (21, 12).

3. The utility transport vehicle (1) according to claim 2,
**characterized in that** the cell (6) comprises means (22) for driving the displacement of the moving parts (212, 122) of the uprights (21, 12), these driving means (22) being housed at least partially inside said uprights (21, 12).

4. The utility transport vehicle (1) according to claim 3,
**characterized in that** the means (22) for driving the displacement of the moving parts (212, 122) of the uprights (21, 12) comprise cables (221), pulleys for mounting of said cables (221) with a pulley block and at least one cylinder (223) for driving the displacement of said cables (221).

5. The utility transport vehicle (1) according to one of the preceding claims,
**characterized in that** at each side face (9), the space left free below the connecting bridge (15) between the rear face (8) and the front face (7) of the cell (6) is an at least partially closable face able to be closed by a closing element (142), such as a rolling shutter.

6. The utility transport vehicle (1) according to one of the preceding claims, **characterized in that** the front communication face (7) of the cell (6) with the storage housing (3) is a face closable using a closing element (141), such as a rolling shutter.

7. The utility transport vehicle (1) according to one of the preceding claims,
**characterized in that** it comprises means (23) for locking the platform (19) at least in the intermediate transport position.

8. The utility transport vehicle (1) according to one of the preceding claims,
**characterized in that** it comprises means (24) preventing the startup or emission of an alert signal in the low position for bearing on the ground of the platform (19) of the cell (6).

9. The utility transport vehicle (1) according to one of the preceding claims,
**characterized in that** the platform (19) of the cell (6) comprises platform elements (191, 192) forming a plate arranged side by side from a side face (9) toward the other side face (9) of the cell (6), at least two (191) of the platform elements (191, 192) forming the plate each being mounted pivoting around an axis extending substantially parallel to the longitudinal axis of the utility transport vehicle (1) to allow the passage of said platform elements (191) from a so-called horizontal position, in which they extend in a coplanar manner, to an inclined position in which they are inclined with a downward slope from the inside toward the outside of the cell (6) to form a circulation ramp.

10. The utility transport vehicle (1) according to one of the preceding claims,
**characterized in that** the platform (19) of the cell (6) comprising plate-forming platform elements (191, 192) arranged side by side from one side face (9) toward the other side face (9) of the cell (6), at least one (192) of the platform elements (191, 192) is mounted upwardly and downwardly mobile, this platform element (192) being able to form, in the high position, a stop preventing lowering of the charge transport plate (33) of the light vehicle (30) in the state of said light vehicle (30) positioned on said platform (19) of the cell (6).

11. A mobile logistical base comprising a utility transport vehicle (1) and a light vehicle (30), said light vehicle (30) comprising a charge transport plate (33),
**characterized in that** the utility transport vehicle (1) of the mobile logistical base is according to one of claims 1 to 10.

12. A cell (6), in particular for transporting a light vehicle (30) comprising a charge transport plate (33), said cell (6) being able to be positioned behind a charge storage housing (3) provided with a floor (4) and arranged in the extension of a driving station (2) in order to produce a utility transport vehicle (1) according to one of claims 1 to 10, the light vehicle (30) being intended to extend inside said cell (6) with its longitudinal axis arranged transversely to the longitudinal axis of the utility transport vehicle (1) in the coupled state of the cell (6) to said storage housing (3),
**characterized in that** the cell (6) comprises a so-called front face (7) able to be coupled to the storage housing (3) and able to allow the communication of the cell (6) with the storage housing (3), a so-called rear face (8) opposite the front face (7) of the cell (6), two side faces (9), a top face (10) forming a roof and a bottom face (11) forming a floor, **in that** the rear face (8) of the cell (6) is delimited by two uprights (12) connected to one another in the lower part by a crosspiece (13) able to form the bumper and the underride guard of the utility transport vehicle in the coupled state of the cell (6) to the storage housing (3) of the utility transport vehicle (1), **in that** the space of the rear face (8) left free above the lower crosspiece (13) between the uprights (12) is able to be closed at least partially by a closing element (140), such as a rolling shutter, **in that** the rear face (8) of the cell (6) is, at the side faces (9), connected, in the upper part, to the front face (7) of the cell (6), by a bridge-type connection (15), to delimit, at each side face (9), in cooperation with the connecting bridge (15) and the front face (7), a so-called side closable opening (16) able to allow the loading/unloading of the light vehicle (30), **in that** the bottom face (11) of the cell (6) is a mobile platform (19) connected to the front (7) and rear (8) faces of the cell (6) by connecting members (20) to allow, in the coupled state in a suspended manner of the cell (6) from the storage housing (3) of the utility transport vehicle (1), an upward and downward displacement of said platform (19) between at least three positions, namely a low position for bearing on the ground in which the light vehicle (30) is able to be loaded/unloaded from the platform (19) of the cell (6) through a side opening (16) of the cell (6), a so-called intermediate transport position in which the platform (19) of the cell (6) is able to extend at a lower level than that of the floor (4) of the storage housing (3) of the utility transport vehicle (1) to allow substantially coplanar positioning of the floor (4) of the storage housing and the charge transport plate (33) of the light vehicle (30) for a charge transfer between the light vehicle (30) and the floor (4) of the storage housing (3) of the utility transport vehicle (1) and a so-called dock loading/unloading high position, in which the platform (19) of the cell (6) is able to extend in a coplanar manner with the floor (4) of the storage housing (3) of the utility transport vehicle (1) in order to transfer a load between the platform (19) and the floor (4), said platform (19) of the cell (6) extending in each of these positions plumb with the face (10) forming the roof of the cell (6).
